# EUROPEAN PATENT APPLICATION

(11) **EP 1 657 228 A1**
(43) Date of publication of application: **17.05.2006**
(21) Application number: 05257028.0
(22) Date of filing: 14.11.2005
(51) Int. Cl.: C04B 41/50, C04B 41/45, B01D 39/20

(54) **Diamond-coated porous substrate**

(30) Priority: 16.11.2004 JP 2004331428
(71) Applicant: Sumitomo Electric Industries, Ltd., Osaka-shi, Osaka 541-0041 (JP)
(72) Inventor: Seki, Yuichiro, Itami Works of Sumitomo, Itami-shi Hyogo (JP); Izumi, Kenji, Itami Works of Sumitomo, Itami-shi Hyogo (JP); Imai, Takahiro, Itami Works of Sumitomo, Itami-shi Hyogo (JP)
(74) Representative: Cross, Rupert Edward Blount

(57) **Abstract**

The object of the invention is to provide a porous composite substrate with excellent durability, which can be physically or chemically stable and can be used in severe environment, by providing a coating layer with high corrosion resistance and insulating properties or good electric conductivity if required, on a porous base material having open pores and a filtration function, and to use this porous composite substrate effectively as filters and field electrodes for water treatment or the like.

The present invention is a porous composite substrate comprising a composite member, the composite member comprising a porous base material and a diamond layer which covers the porous base material, wherein the porous base material and the composite member have open pores to serve a filtration function. The porous base material is an insulator, a semiconductor, or a metal.

## Description

### TECHNICAL FIELD

The present invention relates to a composite substrate in which a porous base material is coated with a diamond layer or an electrically conductive diamond layer, a filter and an electrochemical electrode using the substrate, and a liquid treatment apparatus and liquid treatment method using them.

### BACKGROUND ART

In recent years, due to increased number of regulations and concerns relating to environmental and energy problems, technologies relating to industrial wastes, wastewater, and recycling have been rapidly developed and diversified. From this standpoint, a demand was raised for filters with very high physical and chemicals stability.
Ceramic filters have heat resistance, chemical resistance, and pressure resistance superior to those of other conventional filter materials, for example, organic membranes, and they have been already applied in a variety of fields including food industry and pharmaceutical industry (see Patent Document 1). However, due to recent trend to diversification of conditions and environments under which filters are used, the conventional ceramic filters are sometimes insufficient when they are used in solutions and environments with very strong corrosive activity.

In addition to the aforementioned chemically severe conditions, when solutions including very hard particulate materials such as diamond or gas particles are filtered, the filter surface is sometimes deteriorated and worn out by physical impacts.
Furthermore, the filters are clogged by the substances filtered therethrough necessarily and in such cases the filters are generally reused after cleaning, but in very specific corrosive environments, users often cannot clean the filters due to safety concerns. A problem is that when the filters are used in such environments, the users find them difficult to maintain.

Diamond has the highest hardness and thermal conductivity among substances and exhibits high corrosion resistance by being extremely stable with respect to practically all acids and alkalis. Another feature thereof is that it is usually an insulator but becomes a good conductor by doping B etc. thereto.
Owing to such specific properties thereof, diamond has applied to practical uses such as tools, heat sinks, window materials and electrochemical electrodes (see Non-patent Document 1 and Patent Document 2). There are coated tools having a diamond coating on a base material, and providing such a diamond coating on the base material imparts the base material with excellent functional properties.
Meanwhile, substrates such as Si or Nb were coated with conductive diamond film and many trials that utilize them as electrodes for electrochemical reactions were run and reported energetically (for example, Non-patent Document 2). In this regard, an experiment in which a conductive diamond having many pores was applied to an electrode for ozone generation was reported (Non-patent Document 3).
Patent Document 1: Japanese Patent Publication No. 2000-169254
Patent Document 2: Japanese Patent Publication No. H9-268395
Non-patent Document 1: New Diamond, Vol. 16, No. 4, p. 3-8
Non-patent Document 2: New Diamond and Frontier Carbon Technology, vol. 9, No. 3, 1999, p.229-240
Non-patent Document 3: The 10^{th} International Conference on New Diamond Science and Technology, 2005, Abstract Book, p.29

### DISCLOSURE OF THE INVENTION

It is an object of the present invention to provide a porous composite substrate with excellent durability, which excels in physical and chemical stability and can be used in severe environment, by providing a coating layer with high corrosion resistance and insulating properties or good electric conductivity in some cases, on a porous base material which has open pores and a filtration function. It is another object to use this porous composite substrate effectively for filtration filters, field electrodes, and water treatment.

The inventors have found that coating a substrate surface with a diamond layer makes it possible to provide a filter with excellent durability, thereby resolving problems of deterioration of filter durability, such as deterioration of substrate surface, strength decrease of the entire substrate, and degradation of filtration function, under the effect of physical and chemical interaction between solutions to be filtered and the surface of filter substrate, when porous substrates of various kinds are used as the filter. Accordingly, the present invention has the following constitutions.

(1) A porous composite substrate comprising a composite member,
   the composite member comprising a porous base material and a diamond layer which covers the porous base material,
   wherein the porous base material and the composite member have open pores to serve a filtration function.
(2) Said porous base material is an insulator, a semiconductor, or a metal.
(3) Said insulator is an insulating ceramic.
(4) Said insulating ceramic includes at least one selected from aluminum oxide, silicon carbide, silicon nitride, aluminum nitride, silicon oxide and mullite.

(5) Said semiconductor is Si.
(6) Said metal is Mo, W or Nb.
(7) Said diamond is a polycrystalline CVD diamond.
(8) A pore size of said porous base material is 1 *µ*m to 1000 *µ*m.

(9) A film thickness of the diamond layer of the porous composite substrate is 1 *µ*m to 200 *µ*m.
(10) Said diamond layer of the porous composite substrate is an electrically conductive diamond.
(11) At least one dopant selected from boron, nitrogen, phosphorus and sulfur is contained in said electrically conductive diamond.
(12) A filter using said diamond-coated porous composite substrate.

(13) An electrode for electrolysis using said porous composite substrate coated with electrically conductive diamond.
(14) A liquid treatment apparatus using said composite substrate, said filter, or said electrode.
(15) A liquid treatment method using said composite substrate, said filter, or said electrode.
(16) A method wherein ozone is electrochemically generated by use of said porous composite substrate or said electrode.

For example, ceramic filters have excellent heat resistance and chemical resistance and have been used in a variety of fields, but coating the ceramic filters with diamond can further improve their chemical resistance and wear resistance.
Most ceramic filter materials contain silicon oxide, then such ceramic filters can hardly be used to treat hydrofluoric acid because silicon oxide dissolves in hydrofluoric acid. Silicon nitride is eroded by nitric acid and sulfuric acid. By contrast, diamond is stable in those high erosive environments. Therefore, if they are coated with diamond, even filters of ceramic materials that are less resistant to those erosive environments can prevent deterioration and consumption thereof.

When solutions containing a large amount of particles of hard materials, diamond for example, are wished to be filtered, the filter is physically consumed by the collisions of the hard material particles against the filter surface. This consumption causes such problems as shortening of the filter life and fracture caused by the decrease in strength. Those problems also can be resolved by coating the filter surface with diamond.
Similarly to other general filter materials, sludge-like substances sometimes adhere to the filter substrates and clog the filter. If the filter clogs, the amount of liquid passing through the filter substrate is extremely reduced below the expected amount and the prescribed treatment cannot be finished. As a result, the filtration efficiency decreases significantly. If the filter is cleaned to resolve this problem, the cleaning operation is difficult to conduct manually when the solution subjected to filtration is a severely erosive, hazardous solution. This problem is also possible to be resolved by diamond coating.

Diamond can be imparted with electric conductivity by adding a dopant such as boron. Such an electrically conductive diamond can function as an electrode with an electrochemically high decomposition capability. By coating a porous substrate with electrically conductive diamond and subjecting a solution to electrolysis during filtration, various substances present in the solution can be decomposed. In other words, the filter can decompose a material passing through to be further reduced size while filtrating, and it also can decompose the materials that clog the filter to be reduced size. A technique in electrolysis conducted with electrodes, for example, foreign matters that adhered to the filter are removed from the filter surface (that is, electrode surface) by reversing polarity of the applied voltage, can be utilized.

Methods to manufacture diamonds artificially are generally classified into two groups: methods using ultrahigh pressure and chemical vapor deposition. Chemical vapor deposition is a means that can obtain films of a large surface area, and it includes thermal filament CVD, microwave plasma CVD, DC arc plasma jet CVD, and flame method. No limitation is placed on the method to form a diamond film on a filter substrate as long as it is one of the aforementioned CVD methods, but among them, a thermal filament CVD method and microwave plasma CVD method can produce a stable diamond film in a comparatively simple manner.

Diamond is usually an insulator, but can be imparted with electric conductivity by doping an impurity such as boron, nitrogen, phosphorus, and sulfur. Plenty of trials to give diamond electric conductivity by adding various dopants have been performed in research and development of semiconductor elements and electron-emitting elements utilizing a wide band gap of diamond.
Among those dopants, adding boron in a large amount brings diamond electric conductivity on par with metals. Such boron-doped diamond has been an object of intensive research in the field of electrochemistry because a boron-doped diamond shows, as a chemical electrode, high resolution and detection sensitivity for water treatment and detection of electrochemical reactions.
Such methods make it possible to form a diamond film or an electrically conductive diamond film on a base material filter substrate.

The type of base material substrates is not limited particularly as long as a diamond film effectively grows thereon and it is porous then functions as a filter. Examples of substrates that can be coated with diamond include metals such as silicon, Mo, W, and Nb, ceramics such as SiC, Si₃N₄, Al₂O₃, AlN, and SiO₂, mixtures thereof, or mullite, cordierite and other ceramic porous bodies having a crystal structure comprising them. The base material may be a conductor or an insulator, but when the coated diamond is an electrically conductive diamond, an electric potential is applied to the coated substrate, and the substrate is used to function as both a filter and an electrode for electrolysis, an insulator ceramic is preferred in the case that the substrate material could deteriorate by electrolytic erosion.

First, such a base material substrate is pretreated to enhance the growth of diamond thereon. The pretreatment is carried out by supplying a diamond powder to the base material substrate surface and scratching the substrate surface with them, thereby conducting diamond nucleation treatment of the base material substrate surface. Alternatively, a diamond powder and a base material substrate are placed in a liquid and similar nucleation treatment is conducted by applying ultrasonic waves to the liquid.

A diamond film is then grown on such base material substrate. Generally, the CVD method is used as a method to form a diamond layer. The method is not necessary to be limited to particular one, but the preferable method is the hot-filament CVD method or micro-wave plasma CVD method. The filament CVD method can performed such that the base material substrate is placed on a susceptor of a filament CVD apparatus, a filament of W, Ta or the like is disposed in the vicinity of the base material substrate, the base material substrate is sealed and the apparatus is evacuated, gas is introduced into the apparatus so that the atomic ratio of hydrogen and oxygen is 1-3%, and electric current is passed through the filament to heat and to deposit a diamond film on the base material substrate surface.
For example, hydrogen and methane is introduced as a kind of the gases so as to be a CH₄/H₂ ratio of 1 to 5%, the gas pressure may be 1.3-13.3kPa, the electric current is passed to make a filament temperature be 2000-2200°C, and the substrate is thermoelectrically cooled by the susceptor so as to be a substrate temperature of 650-1000°C.

In the case of microwave plasma CVD, diamond can be deposited on a substrate surface in a similar manner by setting the sample on the susceptor, evacuating, introducing gases, introducing microwaves, and generating plasma in the vicinity of the substrate. As the microwave, for example, a microwave frequency of 950MHz or 2.45GHz is adopted, the microwave is generated at an output of 0.5-60 kW, the hydrogen and methane gas ratio is adjusted to CH₄/H₂ of 1-10%, and the sample is cooled so that the base material substrate temperature is kept within 650-1100°C.
In both cases, the gas source isn't restricted, but methane gas is easy to handle.

It is preferred that the coated diamond be electrically conductive. Electrically conductive diamond can be fabricated by adding a dopant such as boron, nitrogen, phosphorus and sulfur, but an especially good conductor is obtained by adding boron. Boron may be doped by introducing a B source into the apparatus so that the B/C ratio in the gas is 0.01-5%. Examples of methods to introduce a B source include a method using diborane gas, a method of placing boric acid into the apparatus, a method of dissolving boric acid in methanol, adding acetone thereto and bubbling with hydrogen gas, and a method of bubbling trimethyl borate or triethyl borate with an inert gas such as argon. Any of those methods may be used.

The base material substrate can be given a filter function by making it porous. The porous base material substrate should have open pores and cannot have closed pores. Here "the base material substrate has open pores" means that when a liquid is supplied from one side of the base material substrate, it passes through the base material substrate to the opposite side. Conversely, "the base material substrate has closed pores" means that a liquid supplied from one side does not pass through the base material substrate to the opposite side, equal to dense substrates that are not porous.

When the base material substrate has open pores and the pores are open after a diamond film has been coated on the substrate surface, a solution or the like can pass from the face surface to the back surface of the substrate. As a result, the substrate can be effectively used as a filter. When the diamond layer on the surface is electrically conductive, the substrate can be effectively used as a filter and also as a conductive diamond electrode. Thereby, filtration is accompanied by electrolysis, the problem of clogging foreign matters caught in the filter can be resolved by the electrolysis and the filter can function as a clogging-free filter.
By assembling this filter into an apparatus in which a solution to be filtered is circulated, high-performance filtration apparatus and filtration method that use the filter enabling electrolysis as well as having excellent durability can be obtained.

Even in the case that filtrating function as a filter isn't utilized but a function of electrode only is used, the reaction efficiency is enhanced by the effect of increased surface area due to its porosity. Thereby, the present invention serves as a high performance electrode for all objects to which diamond electrode can be applied, for example, waste water treatment such as decomposition of inorganic or organic waste water or removal of heavy metals, production of functional waters such as cleaning water, synthesis or generation of peroxoacid, ozone or hydrogen peroxide, and sensors for medical use. In this case, the base material of the present invention is a porous body which is composed of a microstructure therefore the surface area of the electrode is remarkably larger than other electrodes whose surface area were enlarged by making pores in the diamond or employing a mesh-like shaped base material substrate in order to improve reaction efficiency, thus this invention realizes more efficient electrode performance.

When the diamond-coated substrate has open pores, the relationship among pore diameter of the porous base material substrate, diamond film thickness, and grain size is important.
If the pore diameter of the porous base material substrate is too small, the size of peaks and valleys decreases and bonding strength between the diamond film and substrate cannot be improved. In addition, when a diamond film is coated thereon, though the substrate has open pores, the film coating closes the pores. Since a liquid cannot pass through it as a result, the substrate is unsuitable for such applications.

Meanwhile, when the pore diameter of the porous base material substrate is large, peaks and valleys on the surface are large and coating of diamond on deeply receding portions tends to be incomplete. This is, however, not a serious problem and can be resolved by adequately selecting the pretreatment conditions or the like. Accordingly, even the base material substrate with rather large pore diameter can be used, but a problem associated with too large pore diameters that the rigidity of the base material substrate itself decreases and the substrate itself fractures due to stresses generated between the film and substrate during diamond deposition could arise.

From these view points, it is preferred that the pore size of the base material substrate be within a range from 1 *µ*m to 1000 *µ*m. It is also preferred that the thickness of diamond film be within a range from 1 *µ*m to 200 *µ*m. The film thickness as referred to herein is an average film thickness calculated by dividing the weight difference between states before and after diamond film formation by the surface area of the base material substrate. In this case, the shape of the substrate is recognized macroscopically, that is, a plate-like base material substrate is regarded as a flat plate. Therefore, when a substrate with large peaks and valleys is coated, the local film thickness could be less than the film thickness referred to herein.

The application of the porous composite substrate, which is the product of the present invention obtained in the above-described manner, is not limited to filters for filtration and electrodes for electrochemical reactions. It can be also used as a sheet member to support a variety of catalysts or for adsorption, electrodes for batteries of various kinds, structural members used in special environments, partitions, and the like. Furthermore, adding other materials to porous cavity sections can impart the substrate with new functions.

Because the base material substrate is a porous body having open pores and the diamond-coated filter has open pores even in the state that the surface has been coated with diamond film, it is possible to increase remarkably the durability of portions close to the filter substrate surface, which are worn out by initial contact with solutions, and the durability of the entire filter.

When the diamond layer of the diamond-coated filter is made of electrically conductive diamond, it brings functions of an electrochemical electrode. As a result, electrolysis can be carried out while filtrating. The problem of the filter being clogged by foreign matter pulled thereinto can be resolved by the electrolysis and the filter can function as a clogging-free filter.

Coating a diamond layer on a porous base material which has a filtration function as a filter makes it possible to prevent the porous base material from consumption and deterioration caused by physical impacts induced by collisions of particles of hard substances contained in a solution when the solution passes through the filter, or by chemical action of solutions to be filtrated in the case of extremely erosive solutions.

### BRIEF DESCRIPTION OF THE DRAWINGS

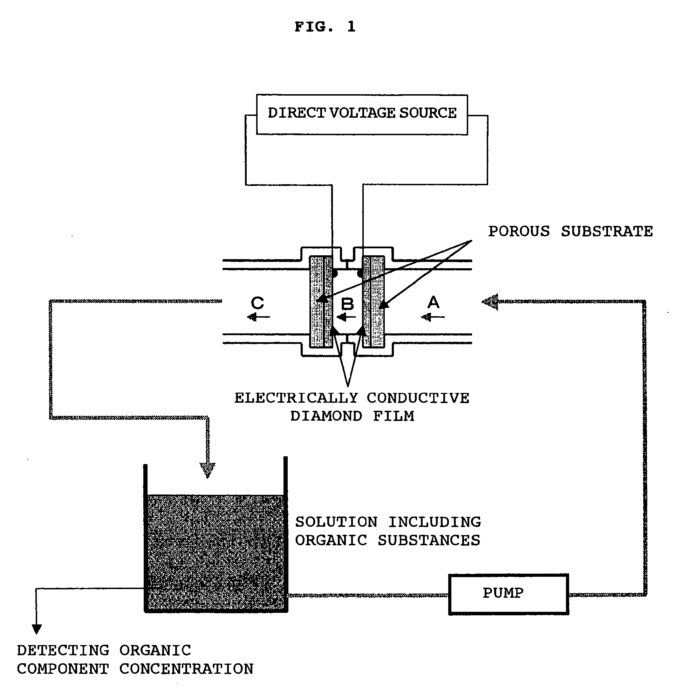

FIG. 1 is a schematic view of the apparatus used to evaluate the diamond-coated filter of Example 1.

### BEST MODE FOR CARRYING OUT THE INVENTION

The present invention will be described below in detail based on Examples.
Example 1
A substrate with a diameter of 50mm was used as a porous base material substrate to be coated with diamond. Si, W, Mo, Nb, Si₃N₄, SiC, Al₂O₃, A1N, and a mixture of Al₂O₃ and SiO₂ were used as materials for the porous substrate. The mean pore size in the base material substrates was divided into grades within a range of 0.9*µ*m to 1080*µ*m, and substrate with a size of each grade was used.
As a pretreatment, a diamond powder was put into isopropyl alcohol, the base material substrate was also put thereinto and seeding treatment was conducted by applying ultrasonic waves. A plasma CVD method was used as a film forming method. H₂ and CH₄ were used as gases, they were introduced at flow rates of 500sccm and 10sccm, respectively, and the gas pressure was 2.7kPa. B was doped to some of the substrates and a diamond film was formed. B₂H₆ was used as a B source, and the flow rate thereof was 0.1 sccm.

A 2.45GHz microwave source was used and 1 kW was introduced. The temperature of the base material substrate was adjusted to 900°C by water-cooling the susceptor's temperature. The temperature of the base material substrate was measured at the surface thereof with a radiation thermometer. Diamond films were grown by this method and the film thickness was regulated by changing the film formation time. The film thicknesses of diamond were 0.93*µ*m to 210*µ*m. Based on the evaluation results obtained by a scanning electron microscope and X ray diffraction, the obtained diamond film was confirmed to be polycrystalline diamond.
The resistivity of the diamond film obtained by the above-described method was measured by a four-probe method, which resulted in 5 x 10⁻³Ω·cm.

The diamond-coated filter thus produced was used and arranged as shown in FIG. 1. A mesh-shaped diamond-coated electrode was disposed close to the diamond-coated filter opposite thereto. The size of open sections in the mesh was 5mm. A solution was circulated by using a pump so that the solution was supplied from one side direction (A region) of the electrode and then the solution was fed to C region via B region.
In the solution, an organic mixed solution containing trichloroethylene and acetone, and a sludge-like sediment including a diamond powder were mixed with 0.1M sulfuric acid solution, and this solution was filtered by the diamond-coated filter. The diamond-coated filter and diamond-coated electrode were wired and connected to a power source, so that an electric potential was applied and electric current was passed therebetween and electrolysis could be conducted, while filtrating. Then, the case where the filtration and electrolysis were used together was compared with the case of filtration only. After the solution was circulated and filtrated for 4 hours, the weight changes of the sediment in the solution were measured. For comparison, porous substrates comprising a resin and a metal, as porous substrates that were not coated with diamond, were prepared separately from those diamond-coated porous substrates and the same experiment by use of them was conducted. The results are shown in Table 1. Naturally, when a base material substrate with closed pores was tried to use for the same test, the solution couldn't flow and the experiment wasn't able to be performed.

**Table 1**

| Smpl. No. | Base material substrate | | Diamond film | Results (sediment decrease) | Results (sediment decrease) |
|---|---|---|---|---|---|
| | Substrate | Pore diameter (*µ*m) | Film thickness (*µ*m) | Without electrolysis | With electrolysis |
| 1-1 | W | 0.90 | 1.5 | Solution could not pass | Solution could not pass |
| 1-2 | W | 0.90 | 0.93 | 96% decrease (passage was impossible later) | Electric current was unstable |
| 1-3 | W | 1.1 | 1.2 | 78% decrease | 1.8% decrease |
| 1-4 | Si | 1.9 | 1.5 | 71% decrease | 1.5% decrease |
| 1-5 | Mo | 2.6 | 1.8 | 69% decrease | 1.7% decrease |
| 1-6 | AlN | 4.1 | 3.1 | 63% decrease | 1.8% decrease |
| 1-7 | Mullite | 15 | 12.6 | 42% decrease | 2.1% decrease |
| 1-8 | Si₃N₄ | 8.2 | 5.8 | 51% decrease | 1.6% decrease |
| 1-9 | Si₃N₄ | 30 | 16.4 (non-doped) | 36% decrease | - |
| 1-10 | Si₃N₄ | 29 | 11.2 | 38% decrease | 3.1% decrease |
| 1-11 | Al₂O₃ | 120 | 29.1 | 43% decrease | 4.1% decrease |
| 1-12 | Al₂O₃ /SiO₂ | 320 | 58.1 | 51% decrease | 5.9% decrease |
| 1-13 | Al₂O₃ | 480 | 86.8 | 68% decrease | 7.1% decrease |
| 1-14 | SiC | 950 | 185 | 74% decrease | 9.2% decrease |
| 1-14 | SiC | 950 | 205 | Substrate cracked, continuation was difficult | 9.2% decrease |
| 1-15 | SiC | 1080 | 210 | Substrate cracked, continuation was impossible | Substrate cracked, continuation was impossible |
| 1-16 | Nb | 3.1 | 2.1 | 64% decrease | 1.8% decrease |
| 1-17 | Resin | 26 | 0 (non-coated) | 51 % decrease (continuation was impossible) | - |
| 1-18 | Metal (Ni) | 40 | 0 (non-coated) | 41 % decrease (continuation was impossible) | - |

From Table 1, it was confirmed that the amount of sediment in the solution decreased, in any case of porous substrates of W, Al₂O₃ and SiC, after the solution was circulated and filtrated by use of the filter in which the substrate was diamond-coated. Furthermore, when the filter was observed after the treatment, the filter was found to show no degradation. When the filtration was combined with electrolysis, it was revealed that the reduction of the amount of sediment was larger than that in the case of filtration alone.
By comparison of the filters after the treatment that was accompanied with electrolysis and that was not, it demonstrated that when electrolysis was not carried out, a large amount of the sediment clang to the filter, whereas when the electrolysis was applied together, practically no sediment adhered to the filter. The reason is understood that when electrolysis is used together, the sediment trapped in the filter is decomposed by the electrolysis, whereas when electrolysis is not carried out, the sediment is trapped in the filter, the flow rate of the solution passing through the filter decreases, and the amount of solution treated within a unit time decreases. In the case where the sediment remained on the filter, by switching the electrode polarity, that is, by switching plus and minus, the sediment present on the filter (that is, on the electrode) was removed.

The substrate with a pore diameter of 0.90*µ*m and an average thickness of diamond film of 1.5*µ*m hardly passed the liquid and the treatment was impossible to be performed. This was understood that because the pores in the filter were too small and were clogged when the diamond film was coated. About the substrate with a pore diameter of 0.90*µ*m and an average thickness of diamond film of 0.93*µ*m, even though the liquid initially went through and could be filtered, when a voltage was applied to conduct electrolysis, the electric current was unstable, the electrolysis was impossible to continue, the filter pores were immediately clogged, and filtration turned almost impossible. The cause is considered that the film thickness was too small therefore the film was fractionated rather than continuous, thereby making the electric current flow unstable.
By contrast with the diamond-coated filter, the filters made from a resin or a metal that were not coated with diamond demonstrated significant deterioration after the treatment and none of them could be used continuously.
In all the cases where the amount of sediment decreased by electrolysis, the TOC (total organic carbon) in the organic solutions was reduced to less than half and it was confirmed that they were electrolytically decomposed by the diamond electrode.

## Claims

1. A porous composite substrate comprising a composite member,
the composite member comprising a porous base material and a diamond layer which covers the porous base material,
wherein the porous base material and the composite member have open pores to serve a filtration function.

2. A porous composite substrate according to claim 1, wherein said porous base material is an insulator, a semiconductor, or a metal.

3. A porous composite substrate according to claim 2, wherein said insulator is an insulating ceramic.

4. A porous composite substrate according to claim 3, wherein said insulating ceramic includes at least one selected from aluminum oxide, silicon carbide, silicon nitride, aluminum nitride, silicon oxide and mullite.

5. A porous composite substrate according to claim 2, wherein said semiconductor is Si.

6. A porous composite substrate according to claim 2, wherein said metal is Mo, W or Nb.

7. A porous composite substrate according to any of claims 1 to 6, wherein said diamond is a polycrystalline CVD diamond.

8. A porous composite substrate according to any of claims 1 to 7, wherein a pore size of said porous base material is 1*µ*m to 1000*µ*m.

9. A porous composite substrate according to any of claims 1 to 8, wherein a film thickness of the diamond layer of said porous composite substrate is 1*µ*m to 200*µ*m.

10. A porous composite substrate according to any of claims 1 to 9, wherein the diamond layer of said porous composite substrate is an electrically conductive diamond.

11. A porous composite substrate according to claim 10, wherein at least one dopant selected from boron, nitrogen, phosphorus and sulfur is contained in said electrically conductive diamond.

12. A filter using the diamond-coated porous composite substrate according to any of claims 1 to 11.

13. An electrode for electrolysis using a diamond-coated porous composite substrate according to claim 10 or 11.

14. A liquid treatment apparatus using the porous composite substrate, the filter or the electrode according to any of claims 1 to 13.

15. A liquid treatment method using the porous composite substrate, the filter or the electrode according to any of claims 1 to 13.

16. A liquid treatment method according to claim 15 wherein ozone is electrochemically generated by use of said porous composite substrate or said electrode.
